(19) Europäisches Patentamt
European Patent Office
Office européen des brevets

(11) **EP 2 249 310 A1**

(12) **EUROPEAN PATENT APPLICATION**
published in accordance with Art. 153(4) EPC

(43) Date of publication:
**10.11.2010 Bulletin 2010/45**

(51) Int Cl.:
*G06T 7/20* (2006.01)     *B60R 1/00* (2006.01)
*B60R 21/00* (2006.01)     *G06T 1/00* (2006.01)
*G08G 1/16* (2006.01)     *H04N 7/18* (2006.01)

(21) Application number: **09708707.6**

(22) Date of filing: **02.02.2009**

(86) International application number:
**PCT/JP2009/051691**

(87) International publication number:
**WO 2009/099022 (13.08.2009 Gazette 2009/33)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **04.02.2008 JP 2008024478**

(71) Applicant: **Konica Minolta Holdings, Inc.**
**Tokyo 100-0005 (JP)**

(72) Inventor: **YAMATO, Hiroshi**
**Hino-shi**
**Tokyo 191-8511 (JP)**

(74) Representative: **HOFFMANN EITLE**
**Patent- und Rechtsanwälte**
**Arabellastrasse 4**
**81925 München (DE)**

(54) **PERIPHERY MONITORING DEVICE AND PERIPHERY MONITORING METHOD**

(57)     A flow calculating section 50 calculates a three-dimensional optical flow at each of measurement points, based on moving information of the respective measurement points calculated by a moving information calculating section 30, and position information acquired by a position information acquiring section 40. A collision determining section 60 determines whether or not an object present in the periphery of a moving object is a collidable object having a possibility of collision against the moving object, based on the three-dimensional optical flows calculated by the flow calculating section 50. An alert controlling section 70 alerts a passenger of a determination result.

FIG.3

**Description**

**TECHNICAL FIELD**

The invention relates to a periphery monitoring device and a periphery monitoring method for monitoring the periphery of a moving object.

**BACKGROUND ART**

In recent years, there is known a technology, wherein two-dimensional optical flows of an object running in a front area of a moving object are obtained based on time-series image data acquired by a stereo camera to determine a possibility of collision against the object (see e.g. patent literature 1).

Patent literature 2 discloses a technology, wherein a stereoscopic object is recognized based on image data acquired by a stereo camera, and three-dimensional optical flows are calculated based on two-dimensional optical flows of the stereoscopic object and a distance to determine whether or not the stereoscopic object is a stationary object or a mobile object.

Patent literature 3 discloses a technology, wherein a vertical edge and a horizontal edge of an object included in piclced-up image data captured by a camera are extracted to calculate two-dimensional optical flows so as to determine an area to be monitored based on a time required for an object present in the monitoring area to reach a running vehicle according to a moving speed component in a vertical direction.

Patent literature 4 discloses a technology, wherein a time required for a vehicle to collide against an object is calculated by using a vanishing point of two-dimensional image data and optical flows.

Patent literature 5 discloses a collision avoiding device which performs a risk determination and calculates a collision time, based on two-dimensional optical flows derived from image data.

In each of the arrangements disclosed in patent literatures 1, and 3 through 5, a collision determining process is performed by using two-dimensional optical flows. Accordingly, in the case where the speed of an object running in a front area of a moving object is slower than the speed of the moving object, there is no or less significant difference between an optical flow of the object and an optical flow of the background of the object, resulting from an influence of the speed of the moving object. Accordingly, it is difficult to discriminate the optical flow of the object from the optical flow of the background, which makes it impossible to accurately determine the possibility of collision against the object.

Further, the arrangement disclosed in patent literature 2 is not adapted to determine the presence or absence of collision, but is adapted to determine whether the object is a stationary object or a mobile object, using three-dimensional optical flows.

Patent literature 1: JP 2001-6096A
Patent literature 2: JP 2006-134035A
Patent literature 3: JP 2006-99155A
Patent literature 4: JP 2006-107422A
Patent literature 5: JP Hei 10-160952

**SUMMARY OF THE INVENTION**

In view of the above, an object of the invention is to provide a periphery monitoring device and a periphery monitoring method that enable to accurately determine the possibility of collision.

A periphery monitoring device according to an aspect of the invention is a periphery monitoring device loaded in a moving object and for monitoring a periphery of the moving object. The periphery monitoring device includes image acquiring means which acquires image data in the periphery of the moving object in a time-series manner; moving information calculating means which sets plural measurement points in each of the image data acquired by the image acquiring means to calculate moving information at each of the measurement points; position information acquiring means which acquires position information of respective positions in the periphery of the moving object in a three-dimensional real space; flow calculating means which calculates three-dimensional optical flows of the respective measurement points, based on the moving information calculated by the moving information calculating means and the position information acquired by the position information acquiring means; and collision determining means which determines whether or not an object present in the periphery of the moving object is a collidable object having a possibility of collision against the moving object, based on the three-dimensional optical flows calculated by the flow calculating means.

A periphery monitoring method according to another aspect of the invention is a periphery monitoring method of monitoring a periphery of a moving object. The periphery monitoring method includes an image acquiring step of acquiring image data in the periphery of the moving object in a time-series manner; a moving information calculating step of calculating moving information of an object included in the image data acquired in the image acquiring step; a position information acquiring step of acquiring position information of the object in a three-dimensional real space; a flow calculating step of calculating three-dimensional optical flows, based on the moving information calculated in the moving information calculating step and the position information acquired in the position information acquiring step; and a collision determining step of determining whether or not the object is a collidable object having a possibility of collision against the moving object, based on the three-dimensional optical flows calculated in the flow calculating step.

## BRIEF DESCRIPTION OF THE DRAWINGS

FIG. 1. is a schematic construction diagram of a periphery monitoring device in accordance with a first embodiment of the invention.
FIG. 2 is a block diagram of the periphery monitoring device shown in FIG. 1.
FIG. 3 is a flowchart showing an operation to be performed by the periphery monitoring device in accordance with the first embodiment of the invention.
FIG. 4 is a diagram showing a flow of a process to be executed by a phase only correlation method.
FIG. 5 is a graph showing a POC function.
FIG. 6 is a diagram for describing a multi-resolution method.
FIG. 7 is a construction diagram of a measuring device.
FIGS. 8A through 8C are diagrams for describing a distance to be measured by the measuring device.
FIG. 9 is a diagram for describing a process of calculating three-dimensional optical flows.
FIG. 10 is a diagram showing an example of a scene to which a collision determining process is applied.
FIG. 11 is a diagram showing two-dimensional optical flows with respect to the scene shown in FIG. 10.
FIG. 12 is a diagram showing three-dimensional optical flows with respect to the scene shown in FIG.10.
FIG. 13 is a diagram for describing the collision determining process on the Y-Z plane.
FIG. 14 is a diagram for describing the collision determining process on the X-Z plane.
FIG. 15 is a schematic construction diagram of a periphery monitoring device in accordance with a second embodiment of the invention.
FIG. 16 is a block diagram of a controller shown in FIG. 15.

## BEST MODE FOR CARRYING OUT THE INVENTION

(First Embodiment)

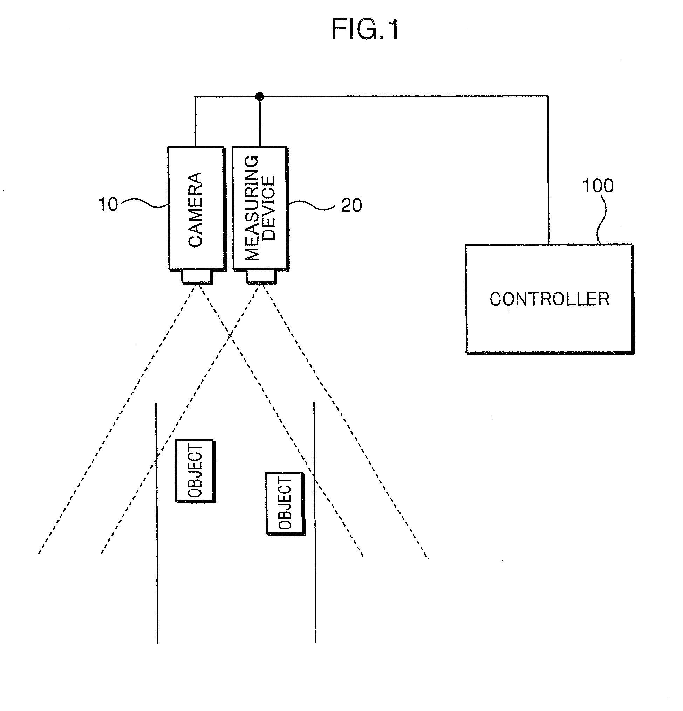

In the following, a periphery monitoring device in accordance with the first embodiment of the invention is described. FIG. 1 is a schematic construction diagram of the periphery monitoring device in accordance with the first embodiment of the invention. The periphery monitoring device is loaded in a moving object such as an automobile, and monitors the periphery of the moving object. The periphery monitoring device includes a camera 10, a measuring device 20, and a controller 100.

The camera 10 is loaded in the moving object in such a manner that the optical axis of the camera 10 is aligned in parallel with a moving direction of the moving object. The camera 10 captures a scene in a front area of the moving object at a predetermined frame rate. The following description is made based on the premise that the camera 10 is calibrated in advance, and camera parameters are already known.

The controller 100 is constituted of a specified hardware device including a CPU, an ROM, and an RAM, and controls the overall operations of the periphery monitoring device. The controller 100 also successively receives image data captured by the camera 10 through a communication cable. The controller 100 may receive image data captured by the camera 10 through radio.

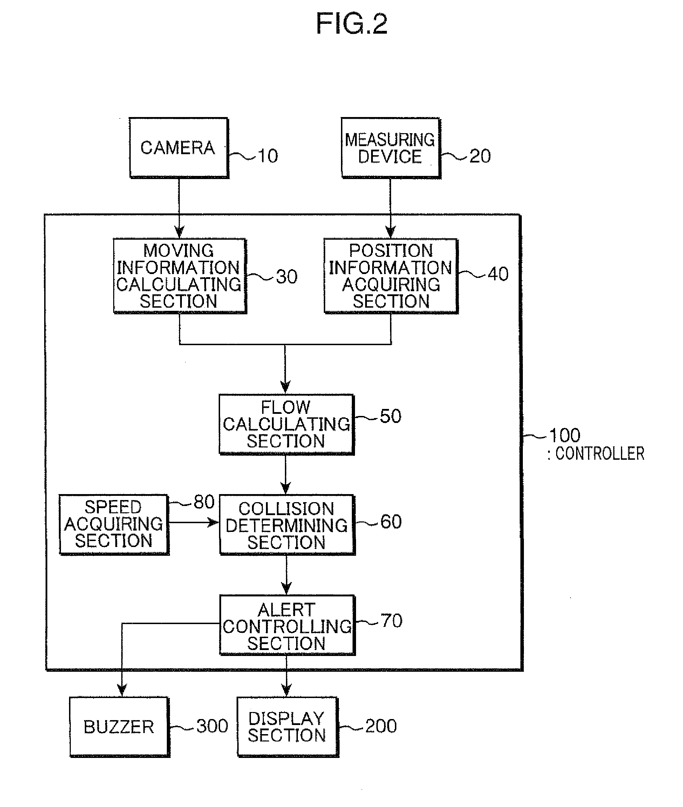

FIG. 2 is a block diagram of the periphery monitoring device shown in FIG. 1. The periphery monitoring device is provided with the camera 10 (an example of image acquiring means), the measuring device 20 (an example of a position information acquiring section), the controller 100, a display section 200 (an example of alert means), and a buzzer 300 (an example of alert means).

The measuring device 20 measures position information of respective positions in the periphery of the moving object in a three-dimensional real space, and outputs the position information to the controller 100. The controller 100 is provided with a moving information calculating section 30 (an example of moving information calculating means), a position information acquiring section 40 (an example of position information acquiring means), a flow calculating section 50 (an example of flow calculating means), a collision determining section 60 (an example of collision determining means), and an alert controlling section 70 (an example of alert means). In this embodiment, the periphery of the moving object means an area of specified dimensions, including image data captured by the camera 10; and the respective positions means positions obtained by dividing the area by the resolution at least equal to or larger than the resolution of the camera 10.

The moving information calculating section 30 sets plural measurement points in each of image data captured by the camera 10, and calculates moving information of the respective measurement points. Specifically, the moving information calculating section 30 sets plural measurement points in each of image data captured by the camera 10 at a predetermined frame rate, retrieves a corresponding point with respect to a certain measurement point set in one of paired image data preceding and succeeding in the image data in a time-series manner, from the other of the paired image data; and calculates a two-dimensional optical flow at each of the measurement points, as moving information, using the measurement point and the corresponding point.

The position information acquiring section 40 acquires position information measured by the measuring device 20. The flow calculating section 50 calculates a three-dimensional optical flow at each of the measurement points, based on the moving information of the respective measurement points calculated by the moving information calculating section 30, and the position information acquired by the position information acquiring section 40.

Specifically, the flow calculating section 50 obtains a differential vector of position information between each of the measurement points and a paired corresponding point, based on the position information acquired by the position information acquiring section 40, and calculates the obtained differential vector, as a three-dimensional optical flow. In this embodiment, the position information is expressed by e.g. an XYZ coordinate system, wherein the arrangement position of the measuring device 20 is defined as an original point. In this embodiment, a Z component denotes a component in the moving direction of the moving object, a Y component denotes a component in the vertical direction, and an X component denotes a component in the widthwise direction of the moving object orthogonal to the Z component and the Y component.

The collision determining section 60 performs a collision determining process of determining whether an object present in the periphery of the moving object is a collidable object having a possibility of collision against the moving object, based on the three-dimensional optical flows calculated by the flow calculating section 50. Specifically, the collision determining section 60 specifies each of the objects present in the periphery of the moving object, based on a distribution of position information of the measurement points; and determines whether or not the object is a collidable object, based on a judgment as to whether an extended line of each of the three-dimensional optical flows at the measurement points of the object intersects with the moving object.

The alert controlling section 70 generates information for alerting a passenger of a possibility of collision, causes the display section 200 to display the alert information, and causes the buzzer 300 to sound an alarm, in the case where the collision determining section 60 has determined that the object in the periphery of the moving object is a collidable object. The speed acquiring section 80 acquires, for instance, the speed of a moving object M1 measured by a speed measuring device loaded in the moving object.

The display section 200 is constituted of a display device such as a liquid crystal display or an organic EL display, and displays various information under the control of the controller 100. In this embodiment, in the case where the moving object is loaded with a car navigation system, the display section 200 may be constituted of a display device of the car navigation system, or a display device other than the display device of the car navigation system. The buzzer 300 sounds an alarm to alert the passenger of a possibility of collision under the control of the controller 100.

(Operation of Periphery Monitoring Device)

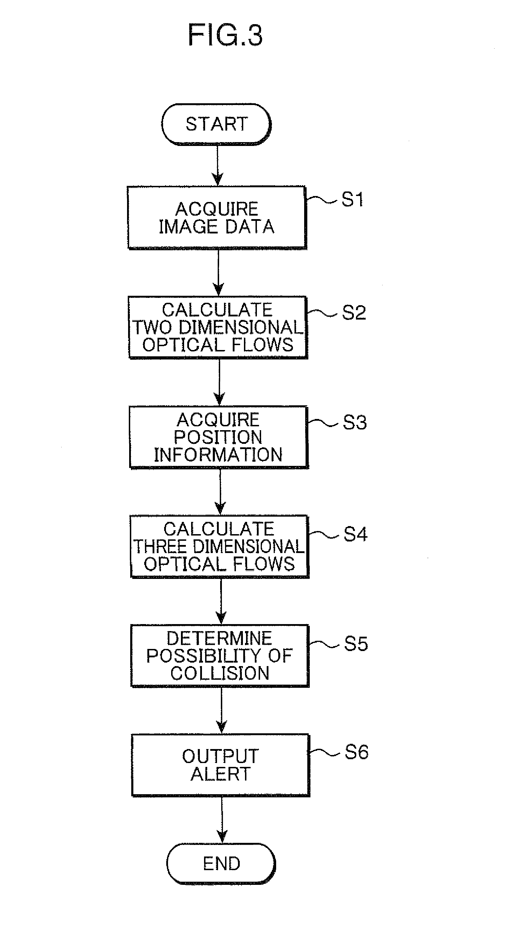

In this section, an operation to be performed by the periphery monitoring device is described. FIG. 3 is a flowchart showing the operation to be performed by the periphery monitoring device. First, in Step S1, the camera 10 acquires image data of a current frame. In this embodiment, let us assume that the point of time when a current frame has been acquired is (t), the point of time when a frame preceding the current frame by one frame has been acquired is (t-1), image data of the current frame is I(t), and image data of the preceding frame is I(t-1).

In Step S2, the moving information calculating section 30 calculates a two-dimensional optical flow at each of the measurement points. Specifically, the two-dimensional optical flows are calculated as follows. First, a certain measurement point is set in the image data I(t-1). In this embodiment, respective pixels of the image data I(t-1) may be set as measurement points, or respective pixels obtained by interpolation at every predetermined pixels may be set as measurement points.

Next, a corresponding point retrieval process is executed to retrieve a corresponding point with respect to each of the measurement points, from the image data I(t). Next, a difference between each of the measurement points, and a paired corresponding point is calculated to calculate a two-dimensional optical flow at each of the measurement points. In this embodiment, a difference between horizontal components at the measurement point and the corresponding point, and a difference between vertical components at the measurement point and the corresponding point are calculated as a two-dimensional optical flow.

One of the following methods (1) through (4) may be used as the corresponding point retrieval process.

(1) SAD (Sum of Absolute Difference) method

The SAD method is a method comprising: setting a window (a reference window) in the image data I(t-1), and a window (a sample window) in the image data (t); obtaining a correlation between image data in the reference window and image data in the sample window based on a correlation value obtained by the formula (1); and retrieving a center point in the sample window, where the correlation has a highest value, as a corresponding point with respect to a targeted point. As shown in the formula (1), the SAD method has advantages that the computation amount is small and high-speed processing is enabled, because a correlation value is calculated by subtracting a pixel value of one of two image data from a pixel value of the other of the two image data.
$$SAD_{(x,y)} = \sum_{i=0}^{Q} \sum_{j=0}^{P} \left| M_L(i,j) - M_R(i+x, j+y) \right| \quad \ldots (1)$$

where $M_L$ denotes image data in the reference window, $M_R$ denotes image data in the sample window, Q denotes the size of the window in the horizontal direction, and P denotes the size of the window in the vertical direction.

(2) SSD (Sum of Squared Intensity Difference) method

The SSD method is a method, wherein a corresponding point is retrieved in the similar manner as the SAD method, except that the following formula (2) is used.
$$SSD_{(x,y)} = \sum_{i=0}^{Q} \sum_{j=0}^{P} (M_L(i,j) - M_R(i+x, j+y))^2 \quad \ldots (2)$$

As shown in the formula (2), the SSD method has an advantage that an error in both of the image data can be detected, even if the window size is small, because a subtraction value between the pixel values of two image data is squared.

(3) NCC (Normalized Cross Correlation) method

The NCC method is a method, wherein a corresponding point is retrieved in the similar manner as the SAD method, except that the following formula (3) is used.
$$NCC_{(x,y)} = \frac{1}{Q \times P} \frac{\sum_{i}^{Q} \sum_{j}^{P} (M_L(i,j) - \mu M_L) \cdot \sum_{i}^{Q} \sum_{j}^{P} (M_R(i+x, j+y) - \mu M_R)}{\sqrt{\sum_{i}^{Q} \sum_{j}^{P} (M_L(i,j) - \mu M_L)^2} \sqrt{\sum_{i}^{Q} \sum_{j}^{P} (M_R(i+x, j+y) - \mu M_R)^2}}$$

$$\ldots (3)$$

$\mu ML$, $\mu MR$: local average value
where $\mu ML$ denotes a local average value of image data in the reference window, and $\mu MR$ denotes a local average value of image data in the sample window.
As shown in the formula (3), the NCC method is a method free of an influence of a linear change in brightness (such as a linear change in the pixel value and the contrast, or noise), because a correlation value is obtained based on variance values obtained by subtracting local average values with respect to two image data.

(4) Phase Only Correlation method

The phase only correlation method is a method comprising: frequency-dividing image data in windows set in the image data I(t-1) and I(t), and retrieving a corresponding point based on a correlation between signals whose amplitude components are suppressed. Examples of the frequency-dividing method are a high-speed Fourier transformation, a discrete Fourier transformation, a discrete cosine transformation, a discrete sine transformation, a wavelet transformation, and a Hadamard transformation.

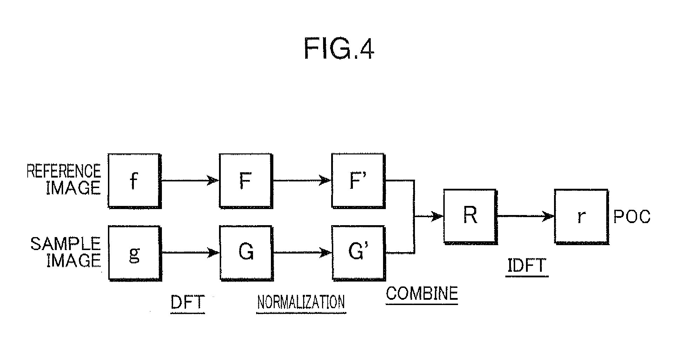

FIG. 4 is a diagram showing a flow of a process to be executed by the phase only correlation method. First, a window (a reference window) is set at such a position that the center of the window is aligned with a measurement point set in the image data I(t-1), and a window is set in the image data I(t). Then, the window set in the image data I(t) is shifted to a position of the image data I(t) which matches with the image data in the reference window by pattern matching or a like process to thereby define a sample window.

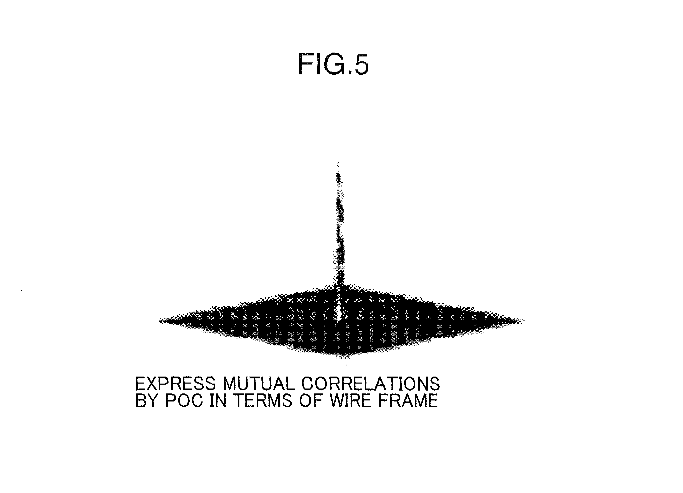

Then, image data (f) in the reference window and image data (g) in the sample window are subjected to a discrete Fourier transformation (DFT) to obtain image data F and image data G. Then, the image data F and the image data G are subjected to normalization into image data F' and image data G'. Then, the image data F' and the image data G' are combined into correlated image data R. Then, the correlated image data R is subjected to an inverse discrete Fourier transformation (IDFT) into a POC function (r). FIG. 5 is a graph showing the POC function (r).

As shown in FIG. 5, it is known that the POC function (r) has a sharp correlation peak, and shows high robustness and estimation precision with respect to image matching. The correlation peak becomes higher, as the correlation between image data (f) and image data (g) becomes higher. In view of this, it is possible to calculate a position shift amount of the sample window relative to the reference window by specifying the position of the correlation peak to thereby calculate a corresponding point.

In this embodiment, the POC function is calculated in the pixel units of reference image data i.e. pixel by pixel. Thus, the position of the correlation peak is detected pixel by pixel. Alternatively, the POC function may be interpolated, and the position of the correlation peak may be estimated subpixel by subpixel.

Then, a point on the coordinate system obtained by adding the position shift amount to the coordinate value of the center point in a sample window W2 is calculated as the corresponding point.

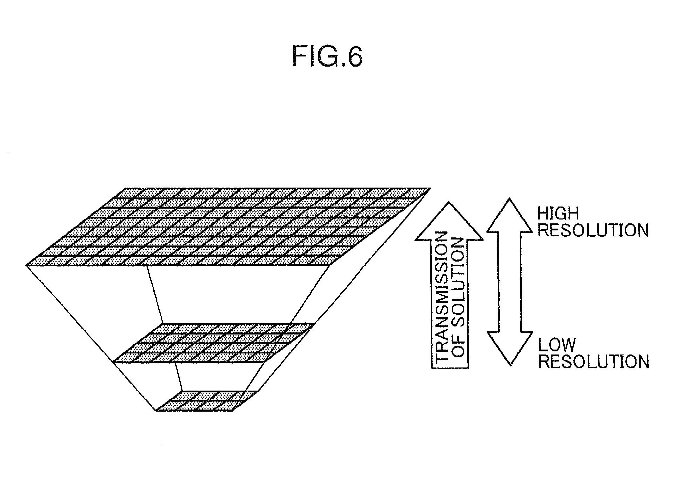

Alternatively, a multi-resolution method may be used in performing the corresponding point retrieval process. FIG. 6 is a diagram for describing the multi-resolution method. In this method, first, image data I(t) and I(t-1) to be processed is subjected to multi-resolution in such a manner that the resolution is increased from lower hierarchy data to upper hierarchy data. Then, a corresponding point with respect to a measurement point in the image data I(t-1) belonging to targeted hierarchy data, which is the lowermost hierarchy data, is retrieved from the image data I(t) belonging to the targeted hierarchy data. In performing the process, the corresponding point may be retrieved by using any one of the aforementioned methods (1) through (4).

Then, hierarchy data higher than the targeted hierarchy data by one stage is defined as succeeding targeted hierarchy data. Then, a retrieval range is set with respect to image data I(t) belonging to the targeted hierarchy data, while using the corresponding point retrieved from the lower hierarchy data, as a reference. In performing the process, the retrieval range is set so that the retrieval range with respect to the targeted hierarchy data becomes narrower than the retrieval range with respect to the lower hierarchy data. Then, a corresponding point is retrieved from the retrieval range. The aforementioned process is repeatedly performed until the uppermost hierarchy data to thereby yield a corresponding point as a solution.

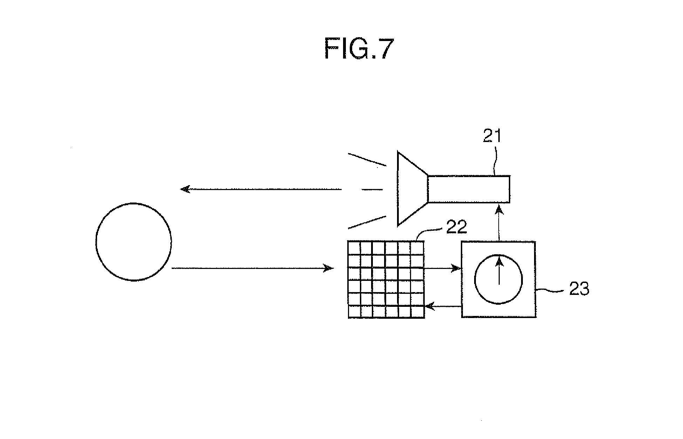

Referring back to FIG. 3, in Step S3, the position information acquiring section 40 acquires position information D(t) at the respective positions in the periphery of the moving object at the point of time (t) measured by the measuring device 20. FIG. 7 is a construction diagram of the measuring device 20. The measuring device 20 shown in FIG. 7 is a device for measuring a three-dimensional position by a TOF (time of flight) method, wherein an LED (light emitting diode) 21 mounted near a CMOS sensor 22 irradiates near infrared light, and a timer 23 measures a time required for the CMOS sensor 22 to receive reflection light of the near infrared light. The measuring device 20 outputs the measured position to the controller 100 as position information. In this embodiment, a laser range finder by Canesta, Inc. may be used.

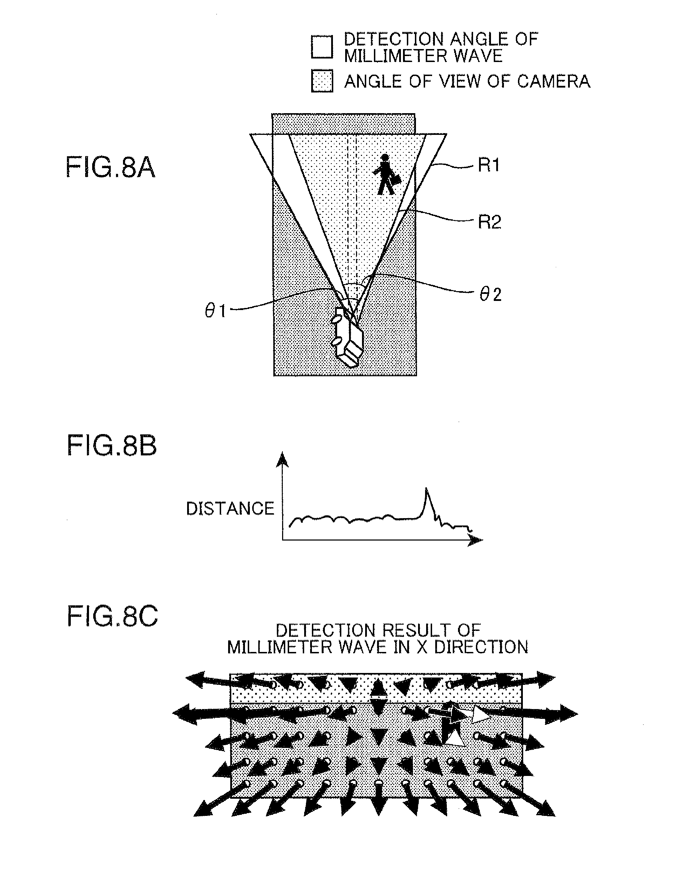

FIGS. 8A through 8C are diagrams for describing a distance to be measured by the measuring device. 20. FIG. 8A is a schematic view when viewed from above the moving object, FIG. 8B is a graph showing a relation between a distance and a detection angle of a millimeter wave, and FIG. 8C shows a scene in a front area of a moving object.

As shown in FIG. 8B, the measuring device 20 is capable of measuring a distance depending on a detection angle of a millimeter wave. Thus, the measuring device 20 is capable of acquiring two-dimensional distance image data showing a distribution of distances at the respective positions in a scene in a front area of the moving object.

As shown in FIG. 8A, if a relation between the detection angle θ1 of a millimeter wave and the angle of view θ2 of the camera 10, and a positional relation between the measuring device 20 and the camera 10 are known, it is possible to specify which position in the distance image data corresponds to which position in the image data captured by the camera 10.

Thus, it is possible to obtain a distance to each of the measurement points in the image data captured by the camera 10, and calculate three-dimensional optical flows as shown by the arrows in FIG. 8C. The details on the process of calculating three-dimensional optical flows will be described later.

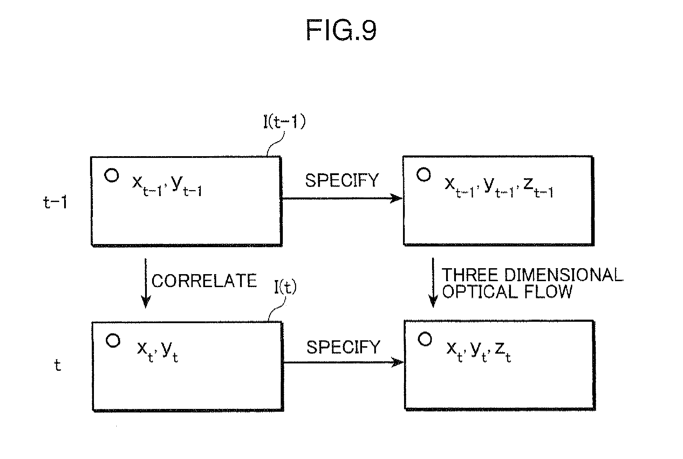

Referring back to FIG. 3, in Step S4, the flow calculating section 50 calculates a three-dimensional optical flow at each of the measurement points. FIG. 9 is a diagram for describing a process of calculating three-dimensional optical flows. In Step S2, the two-dimensional optical flow at each of the measurement points is obtained. Specifically, FIG. 9 shows that a measurement point $(x_{t-1}, y_{t-1})$ on the image data I(t-1) captured at the timing (t-1) is shifted to a certain position $(x_t, y_t)$ on the image data I(t) captured at the timing (t).

Further, position information $(X_{t-1}, Y_{t-1}, Z_{t-1})$ of the measurement point $(x_{t-1}, y_{t-1})$, and position information $(X_t, Y_t, Z_t)$ of the corresponding point $(x_t, y_t)$ in a three-dimensional real space can be specified based on the position information acquired in Step S3. Thus, a three-dimensional optical flow $(OFX_t, OFY_t, OFZ_t)$ can be calculated by obtaining a differential vector $(X_t-X_{t-1}, Y_t-Y_{t-1}, Z_t-Z_{t-1})$ between the position information $(X_t, Y_t, Z_t)$ of the corresponding point $(x_t, y_t)$, and the position information $(X_{t-1}, Y_{t-1}, Z_{t-1})$ of the measurement point $(x_{t-1}, y_{t-1})$.

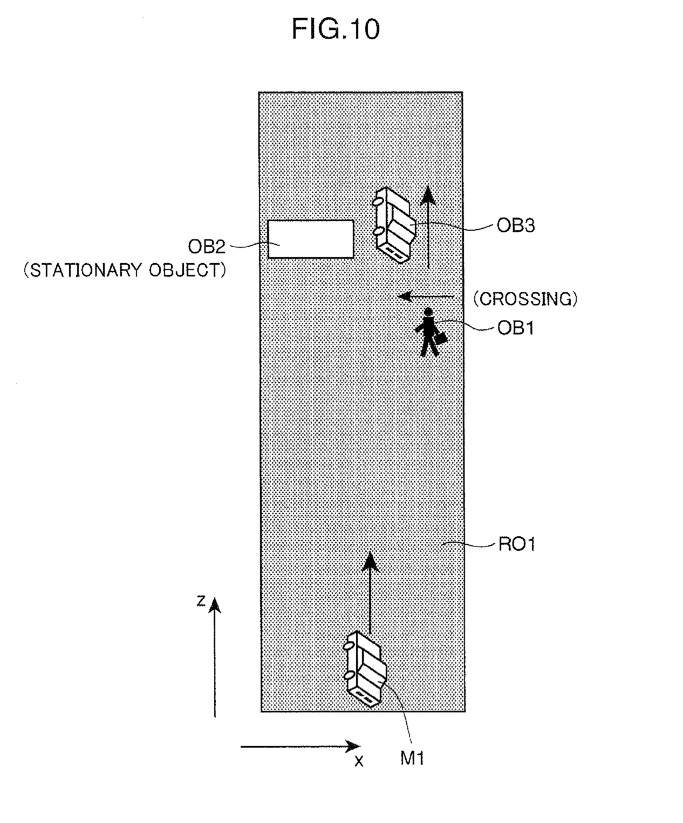

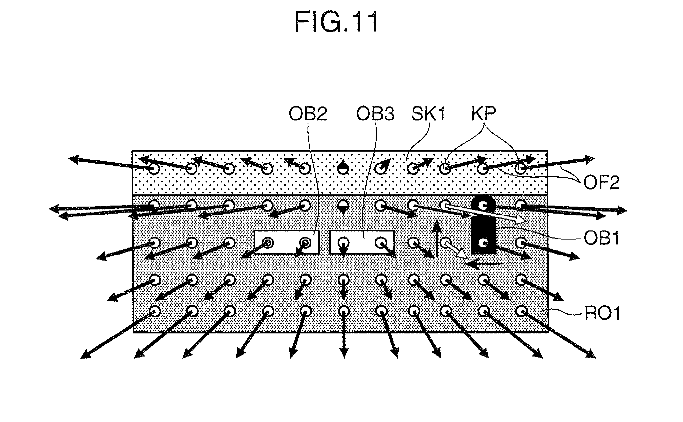

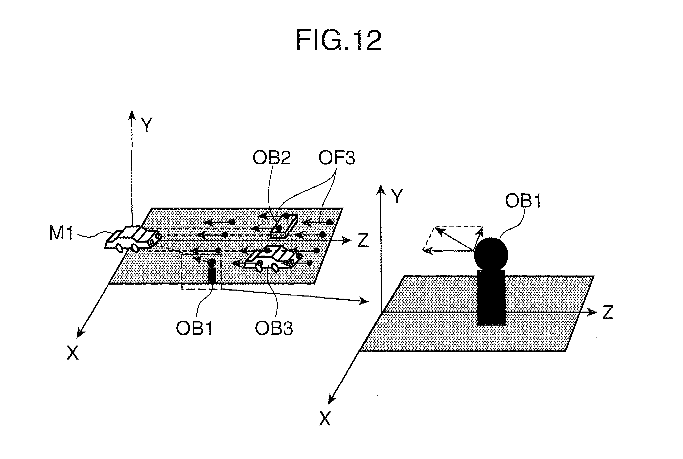

Referring back to FIG. 3, in Step S5, the collision determining section 60 performs a collision determining process. FIG. 10 is a diagram showing an example of a scene to which the collision determining process is applied. FIG. 11 is a diagram showing two-dimensional optical flows with respect to the scene shown in FIG. 10. FIG. 12 is a diagram showing three-dimensional optical flows with respect to the scene shown in FIG. 10.

Referring to FIG. 10, the moving object M1 is running on a road surface RO1. An object OB1, which is a human, is crossing the road in a front area of the moving object M1. Further, an object OB2, which is a building, stands on the road surface RO1 in the front area of the moving object M1. Furthermore, an object OB3, which is another mobile object, is running in the front area of the moving object M1. FIG. 11 is a diagram showing two-dimensional optical flows obtained by capturing the scene by the camera 10 loaded in the moving object M1. As shown in FIG. 11, the camera 10 captures an image, wherein the scene shown in FIG. 10 is captured in the moving direction of the moving object M1.

The round marks shown in FIG. 11 indicate measurement points KP at which two-dimensional optical flows OF2 are calculated. In the image shown in FIG. 11, plural pixels interpolated at every predetermined pixels are defined as the measurement points KP, and the two-dimensional optical flow OF2 is calculated at each of the measurement points KP. Further, in the image shown in FIG. 11, an image of the road surface RO1 and an image of a sky SKI are captured as background images with respect to the objects OB1 through OB3.

As shown in FIG. 11, there is no or less significant difference between the two-dimensional optical flows OF2 of the objects OB1 through OB3, and the two-dimensional optical flows OF2 of the background images. This is because the speed of the moving object M1 is dominant, as compared with the speeds of the objects OB1 through OB3 in the two-dimensional optical flows OF2. In particular, this trend is conspicuous, in the case where the speeds of the objects OB1 through OB3 are slower than the speed of the moving object M1. Thus, it is difficult to perform a collision determining process with high-precision, in the case where the two-dimensional optical flows OF2 are used.

In view of the above, as shown in FIG. 12, in the periphery monitoring device, a high-precision collision determining process is realized by using three-dimensional optical flows OF3. As shown in FIG. 12, it is possible to determine whether or not an object present in a front area of the moving object M1 is a collidable object having a possibility of collision against the moving object M1, based on a judgment as to whether an extended line of each of the three-dimensional optical flows OF3 intersects with the moving object M1.

For instance, observing the object OB1, which is a human in FIG. 12, since an extended line of the three-dimensional optical flow OF3 of the object OB1 intersects with the moving object M1, the object OB1 is determined to be a collidable object. Thus, since the three-dimensional optical flow OF3 can be expressed by a composite vector of the speed of the moving object M1 and the speed of the object, and the movement of the object can be three-dimensionally analyzed, it is possible to perform the collision determining process with high-precision.

In the following, the collision determining process to be executed by the periphery monitoring device is concretely described. The three-dimensional optical flow OF3 is expressed by a differential vector $(X_t-X_{t-1}, Y_t-Y_{t-1}, Z_t-Z_{t-1}=OFX_t, OFY_t, OFZ_t=OF3)$ of position information of a measurement point in a frame captured at the timing (t-1) and a corresponding point in a frame captured at the timing (t) in a three-dimensional real space, in other words, a three-dimensional vector. Accordingly, the three-dimensional optical flow OF3 represents a moving distance of the measurement point during a time corresponding to one frame, in other words, the speed of the measurement point per frame.

Accordingly, as shown in the formula (A), it is possible to calculate a collision time T required for the object to collide against the moving object M1, based on $OFZ_t$, which is a Z component of the three-dimensional optical flow OF3.

$$T = D(OFZ_t)/(OFZ_t) \qquad \ldots (A)$$

where $D(OFZ_t)$ denotes a distance between the moving object M1 and the object in Z direction. Although T does not have a time dimension in a strict sense, T represents the number of frames required for the object to reach the moving object M1. Accordingly, it is conceived that T has a dimension substantially equivalent to a time dimension.

It is possible to recognize at which point of time in the collision time T, the three-dimensional optical flow ($OFX_t$, $OFY_t$, $OFZ_t$) is located by implementing the following formula (B).

$$F(X,Y,Z)=(D(OFX_t)-OFX_t \cdot T, D(OFY_t)-OFY_t \cdot T, D(OFZ_t)-OFZ_t \cdot T) \qquad \ldots (B)$$

The collision determining process is performed by determining F(X,Y,Z). In this embodiment, in determining F(X), the width of the moving object M1 i.e. the size of the moving object M1 in X direction is considered. For instance, let us assume that the camera 10 and the measuring device 20 are disposed at the center of the width W of the moving object M1, and a three-dimensional virtual space defined by three axes of X, Y, and Z is established, wherein the position of the measuring device 20 is defined at the original point. In the case where the following formula (C) is satisfied, the collision determining section 60 determines that an object having a measurement point of a three-dimensional optical flow to be determined is a collidable object in X direction; and in the case where the formula (C) is not satisfied, the collision determining section 60 determines that the object is not a collidable object in X direction.

$$-W/2 \leqq F(X) \leqq W/2 \qquad \ldots (C)$$

In this embodiment, the collision determining section 60 specifies position information of each pixel of image data captured by the camera 10 in the three-dimensional real space, based on a measurement result obtained by the measuring device 20; extracts each of object data indicating the objects, which are included in the image data, in accordance with a distribution of the position information; and determines which object, each of the measurement points belongs to. Specifically, an area constituted of a series of pixels which satisfy a requirement that the Z component of position information belongs to a predetermined range is determined as one object. The area of the moving object M1 defined in the three-dimensional virtual space is called as a moving object area.

Alternatively, an area having a margin with respect to the width W of the moving object M1 may be set as a moving object area to securely avoid a collision. In the modification, the determination equation is expressed by the following formula (D).

$$-(W+\alpha)/2 \leqq F(X) \leqq (W+\alpha)/2 \qquad \ldots (D)$$

where $\alpha$ denotes a marginal amount, and has a predetermined value.

Next, in determining F(Y), the height of the moving object M1 i.e. the size of the moving object M1 in Y direction is considered. For instance, let us assume that the height of the moving object M1 with respect to the measuring device 20 is H, and a distance to the road surface including the tires with respect to the measuring device 20 is P. In the case where the formula (E) is satisfied, the collision determining section 60 determines that an object having a measurement point of a three-dimensional optical flow to be determined is a collidable object in Y direction; and in the case where the formula (E) is not satisfied, the collision determining section 60 determines that the object is not a collidable object in Y direction.

$$-P \leqq F(Y) \leqq H \qquad \ldots (E)$$

In this embodiment, since the formula (E) is implemented by including the height of the tires, there is no likelihood that the road surface may be determined as a collidable object. Alternatively, the collision determining section 60 may perform the collision determining process, using the formula (F) including a marginal amount with respect to the formula (E).

$$-P+\beta 1 \leqq F(Y) \leqq H+\beta 2 \qquad \ldots (F)$$

where β1 β2 denotes a marginal amount, and has a predetermined value.

Lastly, in determining F(Z), the length of the moving object M1 i.e. the size of the moving object M1 in Z direction is considered. For instance, let us assume that the length of a forward portion of the moving object M1 with respect to the arrangement position of the camera 10 and the measuring device 20 is LF, and the length of a rearward portion of the moving object M1 with respect to the arrangement position of the camera 10 and the measuring device 20 is LB. In the case where the formula (G) is satisfied, the collision determining section 60 determines that an object having a measurement point of a three-dimensional optical flow to be determined is a collidable object; and in the case where the formula (G) is not satisfied, the collision determining section 60 determines that the object is not a collidable object.

$$-LB \leqq F(Z) \leqq LF \qquad \ldots (G)$$

Alternatively, the collision determining section 60 may perform the collision determining process, using the formula (H) including a marginal amount with respect to the formula (G).

$$-LB+\gamma 1 \leqq F(Z) \leqq LF+\gamma 2 \qquad \ldots (H)$$

where γ1, γ2 denotes a marginal amount, and has a predetermined value.

In the case where all the requirements on F(X), F(Y), and F(Z) are satisfied, the collision determining section 60 determines that an object having a measurement point of a three-dimensional optical flow to be determined is a collidable object. In this embodiment, in the case where plural measurement points are set with respect to one object, the collision determining section 60 determines an object having e.g. one or more predetermined number of measurement points of three-dimensional optical flows which satisfy the requirement on F(X,Y,Z), as a collidable object. The predetermined number may be any preferred number effective in preventing erroneous determination.

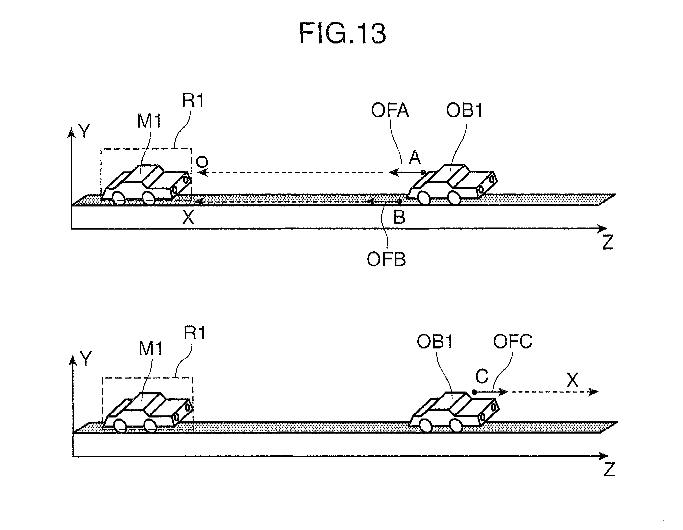

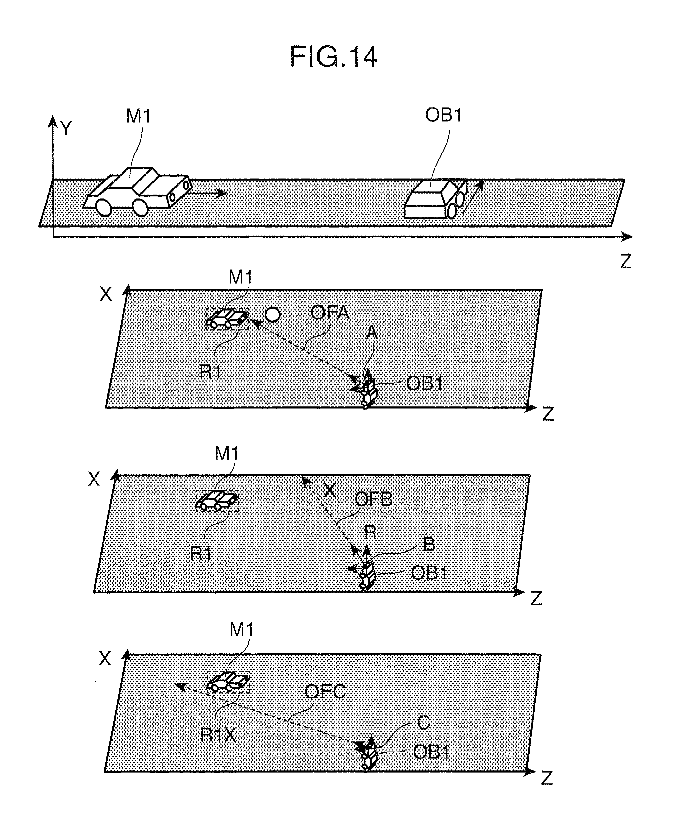

FIG. 13 is a diagram for describing the collision determining process on the Y-Z plane, and FIG. 14 is a diagram for describing the collision determining process on the X-Z plane. As shown in FIGS. 13 and 14, a three-dimensional virtual space defined by the three axes of X, Y, and Z is established, while using a moving object area R1 of the moving object M1, as a reference. As shown in the upper section in FIG. 13, a three-dimensional optical flow OFA at a measurement point A of the object OB1 is directed toward the moving object M1 and satisfies the requirement defined by the formula of F(X,Y,Z), and an extended line of the three-dimensional optical flow OFA intersects with the moving object area R1. Accordingly, the object OB1 is determined to be a collidable object.

On the other hand, as shown in the upper section in FIG. 13, a three-dimensional optical flow OFB at a measurement point B on the road surface does not satisfy the requirement of F(Y) in the formula of F(X,Y,Z), and an extended line of the three-dimensional optical flow OFB does not intersect with the moving object area R1. Accordingly, the road surface is determined not to be a collidable object.

Further, as shown in the lower section in FIG. 13, a three-dimensional optical flow OFC at a measurement point C of the object OB1 is directed in a direction opposite to the moving object M1, and does not satisfy the requirement defined by the formula of F(X,Y,Z). Accordingly, the object OB1 is determined not to be a collidable object.

Further, as shown in the second diagram from the uppermost diagram in FIG. 14, the three-dimensional optical flow OFA at the measurement point A of the object OB1 is directed toward the moving object M1, and satisfies the requirement defined by the formula of F(X,Y,Z), and an extended line of the three-dimensional optical flow OFA intersects with the moving object area R1. Accordingly, the object OB1 is determined to be a collidable object.

On the other hand, as shown in the third and fourth diagrams from the uppermost diagram in FIG. 14, the three-dimensional optical flows OFB and OFC at the measurement points B and C of the object OB1 do not satisfy the requirements of F(X) and F(Z) in the formula of F(X,Y,Z), respectively, and both of the extended lines of the three-dimensional optical flows OFB and OFC do not intersect with the moving object area R1. Accordingly, the object OB1 is determined not to be a collidable object.

Alternatively, the collision determining section 60 may perform the collision determining process by adding the following step. Specifically, in the case where an extended line of a three-dimensional optical flow of an object in the periphery of the moving object M1 intersects with the moving object M1, and the distance between the object and the moving object M1 is shorter than a predetermined reference distance, the collision determining section 60 may determine the object to be a collidable object. More specifically, a stopping distance of the moving object M1 may be calculated based on the speed of the moving object M1 acquired by the speed acquiring section 80, and the reference distance may be changed based on the obtained stopping distance.

The stopping distance can be calculated based on a free running distance E and a braking distance B. The free running distance E can be calculated by implementing an equation: E=VT, where T denotes a response time, and V denotes a velocity of the moving object M1.

The braking distance B can be calculated by implementing an equation: $B=V^2/2u \cdot g$, where u denotes a friction coefficient at the time of braking, and g denotes a gravitational acceleration. The stopping distance S can be calculated by implementing an equation: S=E+B.

Alternatively, the speed acquiring section 80 may calculate a speed based on distance information, in place of acquiring a speed measured by the speed measuring device. Specifically, an average value of the magnitudes of three-dimensional optical flows $(OFX_t, OFY_t, OFZ_t)$ at plural measurement points of an immobile object may be calculated, and the calculated average value may be set as the speed of the moving object M1. In the modification, it is preferable to estimate the road surface based on the height of the moving object M1, calculate an average value of the magnitudes of three-dimensional optical flows at plural measurement points on the road surface, and set the calculated average value as the speed of the moving object M1. The modified arrangement enables to more accurately calculate the speed of the moving object M1.

Applying the above method eliminates a likelihood that an object located far from an area covering the range of the stopping distance S may be determined as a collidable object. The above arrangement prevents that an object apparently having a low probability of collision may be determined as a collidable object, and that a passenger may be alerted when unnecessary.

Further alternatively, the collision determining section 60 may change the reference distance based on a ratio between the respective magnitudes of three-dimensional optical flows of an object, and a distance to the object.

For instance, let us presume that an object, which is distanced away from the moving object M1 beyond the stopping distance, is approaching toward the moving object M1 at a high speed. In such a case, it is highly likely that the object may collide against the moving object M1, if collision determination is made after the object came in the range of the stopping distance S. In view of this, as shown in the formula (I), the collision determining section 60 may obtain a ratio R between the distance to a measurement point of the object, and the magnitude of a three-dimensional optical flow at the measurement point (specifically, a ratio between the X and Z components distances to the object, and the magnitudes of the X and Z components of the three-dimensional optical flow), and determine an object, whose ratio R is equal to or smaller than a predetermined threshold value, as a collidable object.

$$R=(OFX_t^2, OFZ_t^2)^{1/2}/D(OFX_t)^2+D(OFZ_t)^2)^{1/2} \quad \dots (I)$$

Further alternatively, the reference distance may be changed based on the dimensions of an object, in addition to the above determination method. For instance, although the moving object M1 is capable of avoiding a small object, the moving object M1 has a difficulty in avoiding a large object. In view of this, the reference distance is set longer with respect to a large object than a small object. In this case, the dimensions of the object may be calculated by measuring a distance to the object in a three-dimensional real space, and an area of the object as image data, and based on the information relating to the measured distance and the measured area. Further alternatively, a predetermined threshold value may be set; and the collision determining section 60 may perform the collision determining process by setting a reference distance for a predetermined large-sized object, in the case where the object has a size larger than the threshold value, and perform the collision determining process by setting a reference distance for a predetermined small-sized object, in the case where the object has a size smaller than the threshold value. Further alternatively, the reference distance may be sequentially or stepwisely set in such a manner that the reference distance is increased, as the dimensions of the object is increased.

Further alternatively, the collision determining section 60 may determine whether the speed of the object is changed in such a manner as to avoid a collision, based on processing results obtained by executing the collision determining process plural times in a time-series manner, and the speed of the moving object M1, to determine whether the object is a collidable object based on an obtained determination result.

For instance, even if a possibility of collision is detected as a result of the collision determining process, a passenger of the object may not recognize the existence of the moving object M1, if the speed of the object is not changed. On the other hand, in the case where the speed of the object is decelerated, a passenger of the object may recognize the existence of the moving object M1.

In view of the above, the collision determining section 60 executes the collision determining process with respect to each of frame periods, stores processing results of the collision determining process with respect to each of the objects during the frame periods, calculates a change in the speed of the object which is determined to collide a certain number of times or more, and calculates a change in the speed of the moving object M1. Then, in the case where a ratio Rk (=the speed change of the object/the speed change of the moving object M1) between the speed changes becomes larger than a predetermined threshold value, it is determined that the passenger of the object recognizes the existence of the moving object M1, and in the case where the ratio Rk becomes smaller than the predetermined threshold value, it is determined that the passenger of the object does not recognize the existence of the moving object M1. The speed change of the object may be calculated based on three-dimensional optical flows of the object, and the speed change of the moving object M1 may be calculated based on a speed acquired by the speed acquiring section 80.

Referring back to FIG. 3, in Step S6, the alert controlling section 70 generates information indicating a result of the collision determining process in Step S5, causes the display section 200 to display the generated information, and causes the buzzer 300 to output a sound. Specifically, in the case where there exists a collidable object in Step S5, the alert controlling section 70 causes the display section 200 to display e.g. image data, wherein the collidable object is marked on the image data captured by the camera 10, to thereby alert the passenger of the existence of the collidable object.

Further alternatively, in the case where it is determined that there exists a collidable object in Step S5, the alert controlling section 70 causes the buzzer 300 to output an alarm such as a beep sound to thereby alert the passenger of a potential danger of collision. In the modification, the degree of danger of collision may be determined, and the method of outputting an alarm sound or displaying a warning image may be altered depending on the determined degree of danger of collision. For instance, in the case where an object is determined to be a collidable object in Step S5, as far as the object is present sufficiently away from the moving object M1, and the degree of danger of collision is low, an alarm sound output or a warning image display for a low degree of danger of collision may be performed; and contrary to this, as far as the distance to the moving object M1 is short, and the degree of danger of collision is high, an alarm sound output or a warning image display for a high degree of danger of collision may be performed. Further alternatively, the degree of danger of collision may be stepwisely determined, and an alarm sound output or a warning image display may be performed depending on the determined degree of danger of collision.

Thus, since the periphery monitoring device of the first embodiment determines the presence or absence of collision, using three-dimensional optical flows, the first embodiment is advantageous in accurately determining a possibility of collision.

(Second Embodiment)

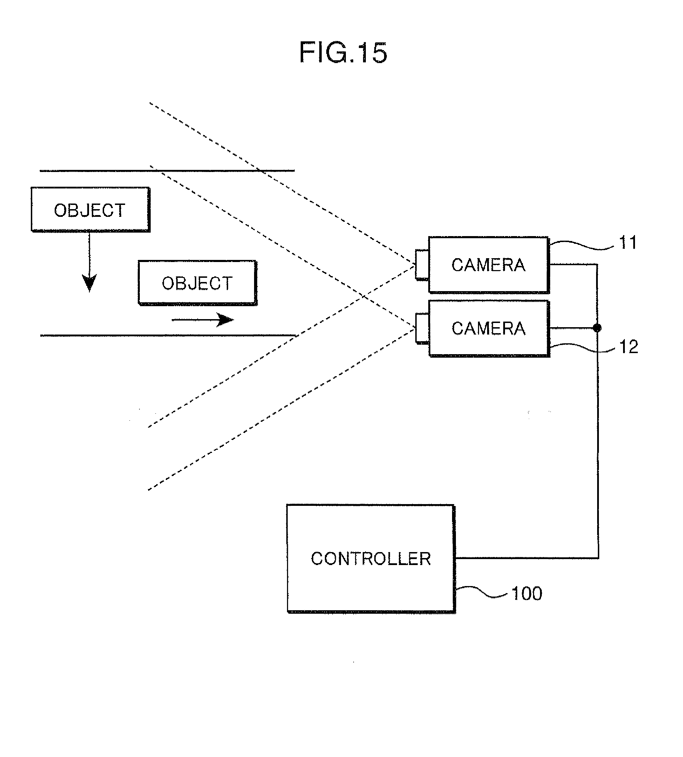

In this section, a periphery monitoring device in accordance with the second embodiment of the invention is described. The periphery monitoring device in accordance with the second embodiment has a feature that a position information acquiring section 40 calculates position information by a stereo method Description on the elements in the second embodiment substantially identical or equivalent to those in the first embodiment is omitted herein, and only the elements in the second embodiment different from those in the first embodiment are described. FIG. 15 is a schematic construction diagram of the periphery monitoring device in accordance with the second embodiment. As shown in FIG. 15, in this embodiment, a stereo camera system provided with two cameras 11 and 12 is employed.

The cameras 11 and 12 are configured in such a manner that image pickup timings of the cameras 11 and 12 are synchronized with each other to capture frame images at a same point of time. The cameras 11 and 12 are operable to pick up images of various objects such as automobiles, motorcycles, and bicycles running in a front area of a moving object M1, as well as passers-by crossing the front area of the moving object M1. The following description is made based on the premise that the cameras 11 and 12 are calibrated in advance, and camera parameters are already known. In this embodiment, there are used the two cameras 11 and 12. The invention is not limited to the above, and three or more cameras may be used.

The cameras 11 and 12 are installed in the moving object M1 in a state that the optical axes of the cameras 11 and 12 are aligned in parallel to Z direction, and the height positions thereof are the same (in Y direction) in a state that the cameras 11 and 12 are disposed away from each other by a certain distance in the widthwise direction (X direction) of the moving object M1.

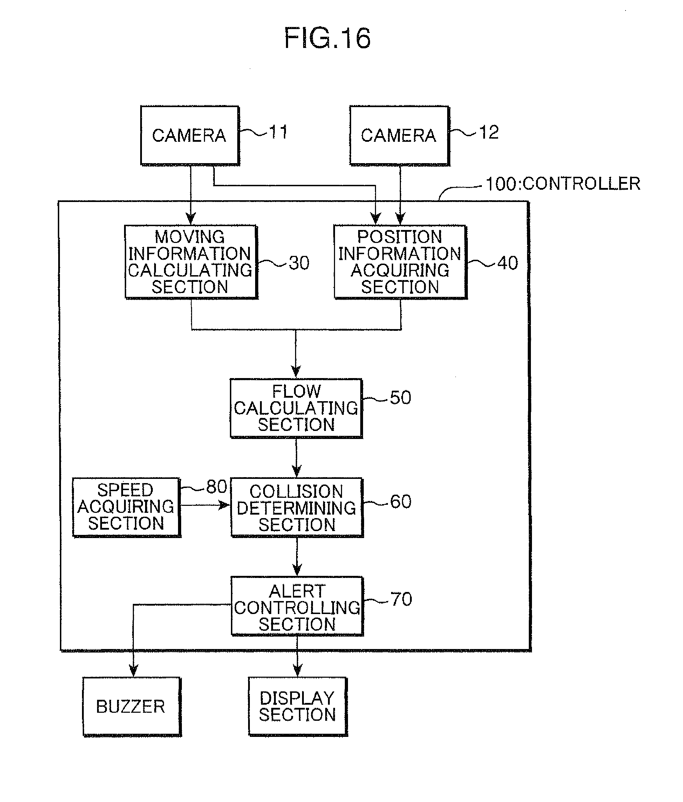

FIG. 16 is a block diagram of a controller 100 shown in FIG. 15. The block diagram of FIG. 16 is different from the block diagram of FIG. 2 in that the cameras 11 and 12 are provided in the second embodiment, whereas the camera 10 and the measuring device 20 are provided in the first embodiment. The position information acquiring section 40 sets image data captured by the camera 11 as a reference image, and image data captured by the camera 12 as a sample image; retrieves a corresponding point with respect to a measurement point set in the reference image at the point of time (t), from the sample image at the point of time (t); obtains a parallax between the measurement point and the corresponding point; and calculates position information of the measurement point in a three-dimensional real space, based on the parallax. The position information acquiring section 40 retrieves the corresponding point by using the same process as the corresponding point retrieval process to be executed by the moving information calculating section 30.

The position information (X,Y,Z) is calculated by e.g. the following formula.

$$X = x \cdot D/f$$

$$Y = y \cdot D/f$$

$$Z = f \cdot B/d$$

where x, y denotes a coordinate of a measurement point on the image data, f denotes a focal length, d denotes a parallax, and B denotes a baseline length of the camera 11 and the camera 12, in other words, an interval between the cameras 11 and 12 in X direction. The parallax may be a difference between horizontal components of the measurement point and the corresponding point, and a difference between vertical components of the measurement point and the corresponding point.

Next, an operation to be performed by the periphery monitoring device in the second embodiment is described referring to FIG. 3. Since the steps other than Steps S1 and S3 in the second embodiment are the same as those in the first embodiment, description thereof is omitted herein.

First, in Step S1, a reference image is obtained by the camera 11, and a sample image is obtained by the camera 12.

In Step S3, the position information acquiring section 40 retrieves, from a sample image 12(t), a corresponding point TP1(t) with respect to each of measurement points KP(t) in a reference image 11(t) at the point of time (t), calculates a parallax d(t) based on respective pairs of the measurement points KP(t) and the corresponding points TP1(t), and calculates position information of the respective measurement points KP(t) based on the obtained parallax d(t). In performing the above operation, the position information acquiring section 40 sets a corresponding point TP2(t) with respect to a measurement point KP(t-1) in a reference image 11(t-1), which has been retrieved from the reference image I1(t) in Step S2, as the measurement point KP(t).

Thus, in the periphery monitoring device of the second embodiment, since position information is calculated by the stereo camera system, it is possible to calculate position information of an object, solely based on information of image data.

In the foregoing, described is a method, wherein a corresponding point is calculated subpixel by subpixel by applying a function such as a parabolic function, in the corresponding point retrieval process. The invention is not limited to the above. Alternatively, a subpixel template may be generated, and a corresponding point may be directly retrieved subpixel by subpixel.

The subpixel template is calculated as follows. Let us assume that a corresponding point TP2(t) is calculated subpixel by subpixel in Step S3 in the second embodiment. Then, a reference window is set, while using the corresponding point TP2(t) as a center of the window. Then, a luminance at each of the pixels of image data within the reference window is calculated by using a bilinear interpolation or a bicubic interpolation. Thereby, the subpixel template is obtained. Then, a corresponding point is retrieved from the sample image, using the subpixel template.

Further alternatively, a three-dimensional optical flow may be obtained by: defining stereo image data at the point of time T1 as L1 and R1; defining stereo image data at the point of time T2 as L2 and R2; generating distance image data D1 by performing L1-R1; generating distance image data D2 by performing L2-R2; calculating a two-dimensional optical flow by performing L1-L2; and calculating the three-dimensional optical flow based on the distance image data D1, the distance image data D2, and the two-dimensional optical flow.

The following is a summary of the periphery monitoring device and the periphery monitoring method.

(1) The periphery monitoring device is a periphery monitoring device loaded in a moving object and for monitoring a periphery of the moving object. The periphery monitoring device includes image acquiring means which acquires image data in the periphery of the moving object in a time-series manner; moving information calculating means which sets plural measurement points in each of the image data acquired by the image acquiring means to calculate moving information at each of the measurement points; position information acquiring means which acquires position information of respective positions in the periphery of the moving object in a three-dimensional real space; flow calculating means which calculates three-dimensional optical flows of the respective measurement points, based on the moving information calculated by the moving information calculating means and the position information acquired by the position information acquiring means; and collision determining means which determines whether or not an object present in the periphery of the moving object is a collidable object having a possibility of collision against the moving object, based on the three-dimensional optical flows calculated by the flow calculating means.

The periphery monitoring method is a periphery monitoring method of monitoring a periphery of a moving object. The periphery monitoring method includes an image acquiring step of acquiring image data in the periphery of the moving object in a time-series manner; a moving information calculating step of calculating moving information of an object included in the image data acquired in the image acquiring step; a position information acquiring step of acquiring position information of the object in a three-dimensional real space; a flow calculating step of calculating three-dimensional optical flows, based on the moving information calculated in the moving information calculating step and the position information acquired in the position information acquiring step; and a collision determining step of determining whether or not the object is a collidable object having a possibility of collision against the moving object, based on the three-dimensional optical flows calculated in the flow calculating step.

In the above arrangements, since the presence or absence of collision is determined by using the three-dimensional optical flows, the possibility of collision can be accurately determined.

(2) Preferably, the collision determining means may determine whether or not the object is the collidable object, based on a judgment as to whether an extended line of each of the three-dimensional optical flows of the object intersects with the moving object.

In the above arrangement, the presence or absence of collision is determined based on a judgment as to whether an extended line of each of the three-dimensional optical flows of the object intersects with the moving object. Accordingly, it is possible to accurately determine the possibility of collision without performing a complicated determining process.

(3) Preferably, the collision determining means may determine that the object is the collidable object, in the case where the extended line of each of the three-dimensional optical flows of the object intersects with the moving object, and a distance between the object and the moving object is shorter than a predetermined reference distance.

In the above arrangement, in the case where the extended line of each of the three-dimensional optical flows of the object intersects with the moving object, and a distance between the object and the moving object is shorter than a predetermined reference distance, the object is determined to be the collidable object. Accordingly, it is possible to prevent that an object far from the moving object and therefore having a low possibility of collision may be determined to be a collidable object, despite that the three-dimensional optical flow of the object intersects with the moving object.

(4) Preferably, the collision determining means may change the reference distance depending on a speed of the moving object.

In the above arrangement, it is possible to prevent that an object far from the moving object and therefore having a low possibility of collision may be determined to be a collidable object, despite that the three-dimensional optical flow of the object intersects with the moving object.

(5) Preferably, the collision determining means may calculate a stopping distance of the moving object based on the speed of the moving object to change the reference distance based on the calculated stopping distance.

In the above arrangement, it is possible to prevent that an object, whose three-dimensional optical flow intersects with the moving object having a decelerated speed, may be determined to be a collidable object.

(6) Preferably, the collision determining means may change the reference distance based on a ratio between a magnitude of each of the three-dimensional optical flows of the object, and the distance between the object and the moving object.

In the above arrangement, it is possible to determine an object which is far from the moving object but is rapidly approaching the moving object, as a collidable object.

(7) Preferably, the collision determining means may change the reference distance based on dimensions of the object.

In the above arrangement, if an object is large, despite that the object is far from the moving object, it is possible to determine the object to be a collidable object, considering a point that it is easy for the moving object to avoid a collidable object, if the collidable object is small, but it is difficult for the moving object to avoid a collidable object, if the collidable object is large. Thus, the security can be enhanced.

(8) Preferably, the collision determining means may determine whether or not a speed of the object is changed in such a manner as to avoid the collision, based on processing results obtained by performing a process of determining whether the object is the collidable object plural times in a time-series manner, and a speed of the moving object, to determine whether or not the object is the collidable object based on a determination result.

In the above arrangement, since an object whose speed is changed in such a manner as to avoid a collision is determined not to be a collidable object, it is possible to perform the collision determining process with high precision.

(9) Preferably, the periphery monitoring device may further include alert means which alerts a passenger of the possibility of collision, if the collision determining means has determined that the object is the collidable object.

In the above arrangement, it is possible to alert the passenger of the possibility of collision.

(10) Preferably, the moving information calculating means may execute a corresponding point retrieval process of retrieving a corresponding point with respect to a targeted point set in one of two image data preceding and succeeding in the image data in a time-series manner, from the other of the image data to thereby calculate the moving information.

In the above arrangement, it is possible to calculate the moving information of the object, solely based on information of the image data.

(11) Preferably, the image acquiring means may be a stereo camera, and the position information acquiring means may execute a corresponding point retrieval process of retrieving a corresponding point with respect to a targeted point set in one of paired image data obtained by the stereo camera, from the other of the paired image data to thereby calculate the position information.

In the above arrangement, it is possible to calculate the position information of the object in the three-dimensional real space, solely based on information of the image data.

(12) Preferably, the position information acquiring means may be a distance measuring device.

In the above arrangement, it is possible to calculate the position information by the distance measuring device such as a millimeter wave radar.

(13) Preferably, the corresponding point retrieval process may be a correlation computation. In this arrangement, since the corresponding point is retrieved by the correlation computation, it is possible to retrieve the corresponding point with high precision.

(14) Preferably, the corresponding point retrieval process may include setting a window in each of the plural image data to be processed, frequency-dividing the image data in the each window, and retrieving the corresponding point based on a correlation between signals whose amplitude components are suppressed.

In the above arrangement, it is possible to retrieve the corresponding point robustly, while suppressing the influence of luminance difference between image data, and noise.

(15) Preferably, the frequency-dividing may be one of a high-speed Fourier transformation, a discrete Fourier transformation, a discrete cosine transformation, a discrete sine transformation, a wavelet transformation, and a Hadamard transformation.

In the above arrangement, since an already established method is used, it is possible to accurately perform the frequency-dividing operation.

(16) Preferably, the corresponding point retrieval process may be a phase only correlation method.

In the above arrangement, since the corresponding point is retrieved by using the phase only correlation method, it is possible to retrieve the corresponding point with high-precision, as compared with a case of using the other frequency-dividing method.

(17) Preferably, the corresponding point retrieval process may be retrieving the corresponding point by using a multi-resolution method including: subjecting the image data to be processed to multi-resolution in such a manner that a resolution is increased from lower hierarchy data to upper hierarchy data; setting a retrieval range, based on a retrieval result of the corresponding point in the lower hierarchy data, so that the retrieval range of the corresponding point in the upper hierarchy data higher than the lower hierarchy data by one stage is narrower than the retrieval range of the corresponding point in the lower hierarchy data; and retrieving the corresponding points successively from the lower hierarchy data to the upper hierarchy data.

In the above arrangement, since the corresponding point is retrieved by using the multi-resolution method, it is possible to effectively and precisely retrieve the corresponding point, even if the corresponding point is located far from the targeted point.

(18) Preferably, the corresponding point retrieval process may be retrieving corresponding points with respect to an entirety of the image data.

In the above arrangement, since the corresponding points are calculated with respect to the entirety of the image data, it is possible to calculate the detailed moving information by the moving information calculating means, and acquire the detailed shape and distance of the object by the position information acquiring means.

**Claims**

1. A periphery monitoring device loaded in a moving object and for monitoring a periphery of the moving object, comprising:

   image acquiring means which acquires image data in the periphery of the moving object in a time-series manner;

moving information calculating means which sets plural measurement points in each of the image data acquired by the image acquiring means to calculate moving information at each of the measurement points;

position information acquiring means which acquires position information of respective positions in the periphery of the moving object in a three-dimensional real space;

flow calculating means which calculates three-dimensional optical flows of the respective measurement points, based on the moving information calculated by the moving information calculating means and the position information acquired by the position information acquiring means; and

collision determining means which determines whether or not an object present in the periphery of the moving object is a collidable object having a possibility of collision against the moving object, based on the three-dimensional optical flows calculated by the flow calculating means.

2. The periphery monitoring device according to claim 1, wherein
the collision determining means determines whether or not the object is the collidable object, based on a judgment as to whether an extended line of each of the three-dimensional optical flows of the object intersects with the moving object.

3. The periphery monitoring device according to claim 2, wherein
the collision determining means determines that the object is the collidable object, in the case where the extended line of each of the three-dimensional optical flows of the object intersects with the moving object, and a distance between the object and the moving object is shorter than a predetermined reference distance.

4. The periphery monitoring device according to claim 3, wherein
the collision determining means changes the reference distance depending on a speed of the moving object.

5. The periphery monitoring device according to claim 4, wherein
the collision determining means calculates a stopping distance of the moving object based on the speed of the moving object to change the reference distance based on the calculated stopping distance.

6. The periphery monitoring device according to claim 3, wherein
the collision determining means changes the reference distance based on a ratio between a magnitude of each of the three-dimensional optical flows of the object, and the distance between the object and the moving object.

7. The periphery monitoring device according to claim 3, wherein
the collision determining means changes the reference distance based on dimensions of the object.

8. The periphery monitoring device according to any one of claims 1 through 7, wherein the collision determining means determines whether or not a speed of the object is changed in such a manner as to avoid the collision, based on processing results obtained by performing a process of determining whether the object is the collidable object plural times in a time-series manner, and a speed of the moving object, to determine whether or not the object is the collidable object based on a determination result.

9. The periphery monitoring device according to any one of claims 1 through 8, further comprising
alert means which alerts a passenger of the possibility of collision, if the collision determining means has determined that the object is the collidable object.

10. The periphery monitoring device according to any one of claims 1 through 9, wherein the moving information calculating means executes a corresponding point retrieval process of retrieving a corresponding point with respect to a targeted point set in one of two image data preceding and succeeding in the image data in a time-series manner, from the other of the image data to thereby calculate the moving information.

11. The periphery monitoring device according to any one of claims 1 through 10, wherein the image acquiring means is a stereo camera, and
the position information acquiring means executes a corresponding point retrieval process of retrieving a corresponding point with respect to a targeted point set in one of paired image data obtained by the stereo camera, from the other of the paired image data to thereby calculate the position information.

12. The periphery monitoring device according to any one of claims 1 through 10, wherein the position information acquiring means is a distance measuring device.

**13.** The periphery monitoring device according to claim 10 or 11, wherein
the corresponding point retrieval process is a correlation computation.

**14.** The periphery monitoring device according to claim 10 or 11, wherein
the corresponding point retrieval process includes setting a window in each of the plural image data to be processed, frequency-dividing the image data in the each window, and retrieving the corresponding point based on a correlation between signals whose amplitude components are suppressed.

**15.** The periphery monitoring device according to claim 14, wherein
the frequency-dividing is one of a high-speed Fourier transformation, a discrete Fourier transformation, a discrete cosine transformation, a discrete sine transformation, a wavelet transformation, and a Hadamard transformation.

**16.** The periphery monitoring device according to claim 14 or 15, wherein
the corresponding point retrieval process is a phase only correlation method.

**17.** The periphery monitoring device according to any one of claims 13 through 16, wherein
the corresponding point retrieval process is retrieving the corresponding point by using a multi-resolution method including: subjecting the image data to be processed to multi-resolution in such a manner that a resolution is increased from lower hierarchy data to upper hierarchy data; setting a retrieval range, based on a retrieval result of the corresponding point in the lower hierarchy data, so that the retrieval range of the corresponding point in the upper hierarchy data higher than the lower hierarchy data by one stage is narrower than the retrieval range of the corresponding point in the lower hierarchy data; and retrieving the corresponding points successively from the lower hierarchy data to the upper hierarchy data.

**18.** The periphery monitoring device according to any one of claims 1 through 16, wherein
the corresponding point retrieval process is retrieving corresponding points with respect to an entirety of the image data.

**19.** A periphery monitoring method of monitoring a periphery of a moving object, comprising:

an image acquiring step of acquiring image data in the periphery of the moving object in a time-series manner;
a moving information calculating step of calculating moving information of an object included in the image data acquired in the image acquiring step;
a position information acquiring step of acquiring position information of the object in a three-dimensional real space;
a flow calculating step of calculating three-dimensional optical flows, based on the moving information calculated in the moving information calculating step and the position information acquired in the position information acquiring step; and
a collision determining step of determining whether or not the object is a collidable object having a possibility of collision against the moving object, based on the three-dimensional optical flows calculated in the flow calculating step.

# FIG.1

# FIG.2

CAMERA ~10

MEASURING DEVICE ~20

MOVING INFORMATION CALCULATING SECTION ~30

POSITION INFORMATION ACQUIRING SECTION ~40

FLOW CALCULATING SECTION ~50

~100 : CONTROLLER

SPEED ACQUIRING SECTION ~80

COLLISION DETERMINING SECTION ~60

ALERT CONTROLLING SECTION ~70

BUZZER ~300

DISPLAY SECTION ~200

# FIG.3

```
          START

            ↓

        ACQUIRE          ⌇ S1
       IMAGE DATA

            ↓

       CALCULATE         ⌇ S2
   TWO DIMENSIONAL
    OPTICAL FLOWS

            ↓

        ACQUIRE          ⌇ S3
        POSITION
      INFORMATION

            ↓

       CALCULATE         ⌇ S4
   THREE DIMENSIONAL
    OPTICAL FLOWS

            ↓

       DETERMINE         ⌇ S5
     POSSIBILITY OF
       COLLISION

            ↓

        OUTPUT           ⌇ S6
         ALERT

            ↓

           END
```

# FIG.4

REFERENCE IMAGE | f → F → F'

SAMPLE IMAGE | g → G → G'

→ R → r | POC

DFT     NORMALIZATION     COMBINE     IDFT

# FIG.5

EXPRESS MUTUAL CORRELATIONS
BY POC IN TERMS OF WIRE FRAME

# FIG.6

TRANSMISSION OF SOLUTION

HIGH RESOLUTION

LOW RESOLUTION

# FIG.7

□ DETECTION ANGLE OF
    MILLIMETER WAVE

▨ ANGLE OF VIEW OF CAMERA

FIG.8A

R1

R2

θ2

θ1

FIG.8B

DISTANCE

FIG.8C

DETECTION RESULT OF
MILLIMETER WAVE IN X DIRECTION

# FIG.9

t-1    ○ $x_{t-1}, y_{t-1}$      I(t-1)

SPECIFY → ○ $x_{t-1}, y_{t-1}, z_{t-1}$

CORRELATE    I(t)      THREE DIMENSIONAL OPTICAL FLOW

t    ○ $x_t, y_t$

SPECIFY → ○ $x_t, y_t, z_t$

# FIG.10

OB2
(STATIONARY OBJECT)

OB3

(CROSSING)
OB1

RO1

Z

X    M1

# FIG.11

## FIG.12

# FIG.13

# FIG.14

# FIG.15

# FIG.16

```
┌──────────────────┐              ┌──────────────────┐
│  CAMERA   ~11    │              │  CAMERA   ~12    │
└──────────────────┘              └──────────────────┘
                                              ~100:CONTROLLER
  ┌──────────────────────────────────────────────────────────┐
  │                                                            │
  │   ┌──────────────┐         ┌──────────────┐              │
  │   │   MOVING     │         │  POSITION    │              │
  │   │ INFORMATION  │~30      │ INFORMATION  │~40           │
  │   │ CALCULATING  │         │  ACQUIRING   │              │
  │   │   SECTION    │         │   SECTION    │              │
  │   └──────────────┘         └──────────────┘              │
  │                                                            │
  │                    ┌──────────────┐                        │
  │                    │    FLOW      │~50                     │
  │                    │ CALCULATING  │                        │
  │                    │   SECTION    │                        │
  │                    └──────────────┘                        │
  │                                                            │
  │   ┌──────────────┐ ~80 ┌──────────────┐                  │
  │   │    SPEED     │     │  COLLISION   │                  │
  │   │  ACQUIRING   │────▶│ DETERMINING  │~60               │
  │   │   SECTION    │     │   SECTION    │                  │
  │   └──────────────┘     └──────────────┘                  │
  │                                                            │
  │                    ┌──────────────┐                        │
  │                    │    ALERT     │~70                     │
  │                    │ CONTROLLING  │                        │
  │                    │   SECTION    │                        │
  │                    └──────────────┘                        │
  │                                                            │
  └──────────────────────────────────────────────────────────┘

  ┌──────────────┐         ┌──────────────┐
  │   BUZZER     │         │   DISPLAY    │
  │              │         │   SECTION    │
  └──────────────┘         └──────────────┘
```

<table>
<tr><td colspan="2" style="text-align:center">**INTERNATIONAL SEARCH REPORT**</td><td>International application No.</td></tr>
<tr><td colspan="2"></td><td>PCT/JP2009/051691</td></tr>
</table>

A. CLASSIFICATION OF SUBJECT MATTER
*G06T7/20*(2006.01)i, *B60R1/00*(2006.01)i, *B60R21/00*(2006.01)i, *G06T1/00*
(2006.01)i, *G08G1/16*(2006.01)i, *H04N7/18*(2006.01)i

According to International Patent Classification (IPC) or to both national classification and IPC

B. FIELDS SEARCHED

Minimum documentation searched (classification system followed by classification symbols)
G06T7/20, B60R1/00, B60R21/00, G06T1/00, G08G1/16, H04N7/18

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2005-209019 A (Toshiba Corp.),<br>04 August, 2005 (04.08.05),<br>Par. Nos. [0030] to [0045]; Figs. 1, 9<br>& US 2005/0165550 A1 | 1-5,9-13,18,<br>19<br>6-8,14-17 |
| Y<br>A | JP 2001-084383 A (President of The University of Tokyo),<br>30 March, 2001 (30.03.01),<br>Par. Nos. [0008] to [0029]; Fig. 1<br>(Family: none) | 1-5,9-13,18,<br>19<br>6-8,14-17 |
| Y | JP 2006-218935 A (Advics Co., Ltd.),<br>24 August, 2006 (24.08.06),<br>Par. No. [0052]<br>(Family: none) | 3-5 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 February, 2009 (27.02.09) | 10 March, 2009 (10.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

<table>
<tr><td>International application No.</td></tr>
<tr><td>PCT/JP2009/051691</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2006/121088 A1  (Konica Minolta Holdings, Inc.), 16 November, 2006 (16.11.06), Full text & JP 2006-318059 A    & US 2008/0089557 A1 & EP 1901225 A1 | 1-19 |
| A | JP 2008-009843 A  (Honda Motor Co., Ltd., Tokyo Institute of Technology), 17 January, 2008 (17.01.08), Full text (Family: none) | 1-19 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001006096 A
- JP 2006134035 A
- JP 2006099155 A
- JP 2006107422 A
- JP HEI10160952 A